(19) Europäisches Patentamt
European Patent Office
Office européen des brevets

(11) **EP 3 785 060 B1**

(12) **FASCICULE DE BREVET EUROPEEN**

(45) Date de publication et mention
de la délivrance du brevet:
**03.12.2025 Bulletin 2025/49**

(21) Numéro de dépôt: **19719842.7**

(22) Date de dépôt: **24.04.2019**

(51) Classification Internationale des Brevets (IPC):
**G02B 19/00** (2006.01)      **G06F 3/01** (2006.01)
**G02B 6/00** (2006.01)      **G02B 5/00** (2006.01)

(52) Classification Coopérative des Brevets (CPC):
**G02B 19/0028; G02B 5/001; G02B 19/0061;
G02B 19/0066; G02B 19/0076; G06F 3/017**

(86) Numéro de dépôt international:
**PCT/EP2019/060436**

(87) Numéro de publication internationale:
**WO 2019/206945 (31.10.2019 Gazette 2019/44)**

(54) **GUIDE DE LUMIÈRE POUR MODULE D'INTERFACE À DÉTECTION DE GESTES**

LICHTLEITER FÜR GESTENDETEKTIONSSCHNITTSTELLENMODUL

LIGHT GUIDE FOR A GESTURE-DETECTING INTERFACE MODULE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.04.2018 FR 1853589**

(43) Date de publication de la demande:
**03.03.2021 Bulletin 2021/09**

(73) Titulaire: **Valeo Comfort and Driving Assistance
94000 Créteil (FR)**

(72) Inventeurs:
• **THORAILLER, Maryline**
**94046 Creteil (FR)**
• **BOMBARD, Stephane**
**94046 Creteil (FR)**

(74) Mandataire: **Delplanque, Arnaud
Valeo Comfort and Driving Assistance
6 rue Daniel Costantini
94000 Créteil (FR)**

(56) Documents cités:
EP-A1- 2 423 569      WO-A1-2011/060487
US-A1- 2009 321 765    US-A1- 2014 215 403
US-B1- 6 193 383

## Description

La présente invention concerne un module d'interface à détection de gestes ou de proximité, en particulier pour une utilisation dans un habitacle de véhicule automobile.

Les détecteurs de gestes ou de proximité détectent la présence d'une partie du corps, généralement la main, les doigts et/ou une partie du bras d'un utilisateur dans un espace de détection. La présence, la position et/ou les mouvements de ladite partie du corps de l'utilisateur sont alors pris en compte pour le contrôle de fonctions commandées par le module d'interface.

WO2011/060487 A1 concerne un module d'interface comparatif de type tactile fonctionnant par détection de l'interruption de transmission d'un faisceau d'une fine couche de lumière, et nécessitant un contact avec une zone d'entrée.

L'entrée dans l'espace de détection de la main d'un utilisateur peut par exemple servir à faire passer le module d'interface d'un mode veille à un mode actif. Si ledit module d'interface comporte par exemple un écran tactile ou d'affichage, l'écran peut être initialement désactivé ou rétroéclairé de façon moins importante en mode veille, et la surface tactile peut être activée uniquement lorsque le module d'interface sort du mode veille c'est à dire lorsqu'un utilisateur approche sa main en vue d'interagir avec le module d'interface.

Lorsque la détection de la position de la main ou du bras de l'utilisateur dans l'espace de détection est prise en compte, les icônes dans la portion de l'écran proche de la position détectée peuvent être agrandies, en particulier proportionnellement à la proximité de la main à l'écran.

La variation de position de la main ou du bras détectée, c'est à dire les mouvements de la main ou du bras, peuvent servir directement à modifier le fonctionnement de modules du véhicule, tels que la climatisation, un système de lecture de médias, l'éclairage intérieur du véhicule, un menu affiché sur l'écran tactile. Par exemple, un balayage (« wipe ») de la main de bas en haut ou de haut en bas peut servir à augmenter ou baisser le volume sonore du système de lecture de médias, tandis qu'un balayage de gauche à droite ou de droite à gauche peut servir à passer à la station radio ou la piste de lecture suivante ou précédente.

Pour positionner et suivre plus précisément la main de l'utilisateur, un nombre élevé de faisceaux lumineux est requis. Ces faisceaux sont par exemple produits au moyen de guides de lumière situés au bord de l'écran et utilisant la lumière d'une ou plusieurs diodes électroluminescentes. Les guides de lumière sont conformés de sorte qu'ils émettent au moins une portion de la lumière recueillie sous forme de faisceau conique, fin selon une direction transverse et allongé selon l'autre direction transverse, ce qui permet d'approcher un plan de l'espace de détection.

L'espace de détection est alors quadrillé au moyen de tels plans de faisceaux.

En déterminant quel faisceau est traversé par la main à quel moment, la position approximative de la main peut alors être déterminée et suivie au cours du temps pour repérer et analyser des gestes spécifiques de l'utilisateur.

Chacun des faisceaux « plans » est usuellement généré au moyen d'un guide de lumière incliné en fonction de l'inclinaison souhaitée du faisceau. Dès lors, un nombre élevé de guides de lumière et de sources ou détecteurs de lumière associés est requis pour procéder à une analyse fine des gestes de l'utilisateur.

Cette élévation du nombre de guides de lumière se traduit par un encombrement plus élevé et une potentielle augmentation du prix à la production.

Afin de résoudre au moins partiellement le problème précédemment mentionné, l'invention a pour objet un module d'interface selon la revendication 1, comportant un guide de lumière.

Le guide de lumière permet de générer, à partir d'un même guide de lumière, deux faisceaux lumineux orientés différemment pour la détection de geste ou de présence d'un utilisateur, ce qui permet de réduire le volume de l'interface et éventuellement son coût de production.

Le guide de lumière peut alors présenter une ou plusieurs des caractéristiques suivantes prises seules ou en combinaison.

Le dioptre intérieur est un dioptre d'entrée situé, à l'état monté du guide de lumière, en face d'une source de lumière, et le dioptre extérieur est un dioptre de sortie qui répartit, du fait de ses deux surfaces transverses, la lumière de la source vers deux cônes allongés transversalement autour de deux plans inclinés dans l'espace de détection.

Le dioptre intérieur est un dioptre de sortie situé, à l'état monté du guide de lumière, en face d'un détecteur de lumière, et le dioptre extérieur est un dioptre d'entrée qui capte, du fait de ses deux surfaces transverses, la lumière de la source venant dans deux cônes allongés transversalement autour de deux plans inclinés dans l'espace de détection, et envoie la lumière de chacun des deux plans inclinés vers son dioptre intérieur.

Le dioptre extérieur comporte deux surfaces planes inclinées dans un plan transverse pour former un dioptre extérieur concave.

Le dioptre intérieur comporte deux surfaces formant des lentilles convergentes, conjuguées chacune avec une des surfaces du dioptre extérieur. On peut alors utiliser deux diodes ou détecteurs et différencier plus facilement le cône de lumière intersecté.

Il comporte une pluralité de dioptres intérieurs disposés le long d'un axe transverse, et délimités par des parois latérales évasées en direction de l'espace de détection.

Il est réalisé d'une seule pièce, les parois latérales évasées délimitant des lobes en forme de pyramide tronquée, la face tronquée formant les dioptres intérieurs.

Une partie des parois latérales évasées des lobes est réalisée sous forme de marches, alternant des faces transversales et des faces inclinées formant l'évasement.

Les lobes à parois latérales évasées réalisées sous forme de marches comprennent des cavités prismatiques selon la direction transverse perpendiculaire à l'axe le long duquel sont alignés lesdits lobes.

On obtient avec un tel guide de lumière un capteur de geste compact et adapté à être installé le long du bord d'un écran.

L'invention incorpore un tel guide de lumière au sein d'un module d'interface.

Le module d'interface peut alors comporter un circuit imprimé, sur lequel est disposée une ligne de sources de lumière et/ou de détecteurs, et un guide de lumière à lobes tel que précédemment décrit, les sources de lumière et/ou les détecteurs étant disposés en face des lobes.

Le guide de lumière peut alors comporter un lobe à parois latérales évasées lisses, et quatre lobes à parois réalisées sous forme de marches, répartis de part et d'autre du lobe à parois lisses, et un détecteur de lumière disposé face au dioptre intérieur du lobe à parois lisses, et quatre diodes électroluminescentes disposées en face des dioptres intérieurs des lobes à parois réalisées sous forme de marches.

Le module d'interface peut alors comporter :

- respectivement au moins deux sources de lumière ou au moins deux capteurs de lumière, arrangés sur un circuit imprimé,

- respectivement au moins un capteur ou au moins une source de lumière, couvrant tout l'espace de détection,

- un premier guide de lumière tel que précédemment décrit, disposé en face d'au moins une des sources de lumière ou un des capteurs de lumière du circuit imprimé,

- un second guide de lumière pour l'émission ou la réception d'un faisceau lumineux autour d'un plan incliné d'un angle θ par rapport à un axe optique du guide de lumière, réalisé sous forme de prisme en matériau transparent d'indice $n_{GL}$ qui comporte :

    ○ un dioptre intérieur destiné à faire face à un circuit imprimé portant une source de lumière ou un détecteur de lumière, formant une lentille convergente dont le foyer est situé au niveau d'une position attendue de la source ou du détecteur de lumière,

    ○ une première face plane orientée parallèlement à l'axe optique du guide de lumière,

    ○ une deuxième face plane inclinée par rapport à la première face plane avec un angle α, vérifiant $\cos(\alpha+\theta) = (1+\varepsilon)\, n_{GL}.\cos 3\alpha$ avec ε un nombre compris entre -0,1 et 0,1.

Un tel module d'interface permet de générer au moins trois faisceaux d'inclinaison différente au-dessus de l'écran au moyen d'un capteur de geste compact et potentiellement moins coûteux.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 montre schématiquement un intérieur de véhicule avec un module d'interface,

- la figure 2 est une vue de profil schématique de l'interface de la figure 1 prise séparément,

- la figure 3 est une vue en coupe d'un module de détection de l'interface des figures 1 et 2,

- la figure 4 est une représentation schématique de guide de lumière,

- les figures 5 et 6 sont des vues en coupe de modules de modes de réalisation alternatifs de module de détection,

- la figure 7 illustre le placement du guide de lumière dans l'interface,

- les figures 8a et 8b sont une vue longitudinale et une vue partielle en perspective d'un mode de réalisation particulier de guide de lumière,

- la figure 9 est une représentation schématique d'un second guide de lumière pour module d'interface,

- la figure 10a illustre la disposition du guide de lumière de la figure 9 dans un détecteur,

- la figure 10b est une vue partielle en perspective d'un mode de réalisation particulier du second guide de lumière,

- la figure 11 est une vue en perspective d'un mode de réalisation alternatif de second guide de lumière,

- les figures 12a et 12b illustrent des modes de réalisation alternatifs de guide de lumière tel qu'en figures 3 et 9,

- la figure 13 illustre la disposition de deux guides de lumières dans un même capteur de gestes.

Sur toutes les figures, les mêmes références se rapportent aux mêmes éléments.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Les termes ci-après tels que « premier », « deuxième » et équivalents sont donnés pour des raisons de simple référencement, sans considération de priorité, de préférence ou d'ordre particulier. La plupart des objets ainsi référencés peuvent voir leurs références interchangées sans dévier du concept de l'invention tel que défini par les revendications.

En particulier, certains éléments sont référencés dans le cadre d'une orientation suivant le sens de propagation de la lumière, dans un sens de fonctionnement particulier. Les termes tels que « en amont », « en aval », « avant », « après », donnés sans précision ultérieure, sont à interpréter dans ce sens.

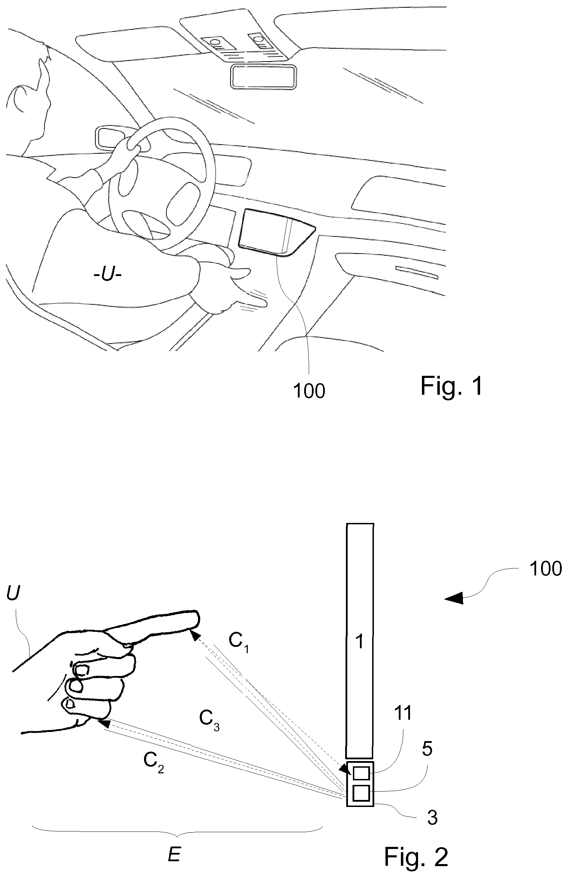

La figure 1 montre de façon schématique un habitacle 1 de véhicule automobile, avec un dispositif optique 100.

Le module d'interface 100 est ici installé dans la console centrale du véhicule : la paroi avant verticale ou inclinée, située entre le conducteur et le passager à l'avant du véhicule. Cet emplacement permet au conducteur, qui est ici l'utilisateur U du module d'interface 100, d'amener aisément sa main dans l'espace de détection du module d'interface 100 pour interagir avec le module d'interface 100.

Le module d'interface est montré plus en détail en figure 2.

La figure 2 est une vue de côté du module d'interface 100, montrant plus en détail un écran 1 et des détecteurs de gestes 3, ainsi que la main d'un utilisateur U, par exemple le conducteur ou le passager avant du véhicule. En figure 2, l'écran 1 et les détecteurs de gestes 3 sont situés dans un plan vertical, et représentés par leurs sections rectangulaires.

L'écran 1 est par exemple un écran à transistors en couche mince, notamment à diodes électroluminescentes, à plasma ou à cristaux liquides. L'écran 1 affiche des données relatives au fonctionnement de modules fonctionnels du véhicule, par exemple un module de climatisation, une installation audio, un assistant de navigation etc.

Les données affichées sont, par exemple dans le cadre d'un module de climatisation, une température de consigne, une puissance de soufflerie, une température extérieure etc.

En alternative, un panneau de touches, de boutons, de diodes électroluminescentes ou une surface tactile peut remplacer l'écran 1, qui peut être simplement un écran d'affichage, ou bien un écran tactile.

Dans le cas d'un écran 1 tactile, la détection de la main approchant peut par exemple servir à sortir la dalle tactile recouvrant l'écran 1 d'un état de veille ou bien à animer et/ou agrandir des icônes autour d'une position d'appui attendue. Dans le cas d'un écran 1 d'affichage, la détection de l'approche de la main de l'utilisateur U peut servir à déclencher une augmentation d'un rétroéclairage de l'écran 1.

Des détecteurs 3 sont positionnés sur la périphérie de l'écran, un détecteur 3 est représenté au-dessous de l'écran 1, mais d'autres détecteurs 3 peuvent être implémentés sur les côtés et au-dessus de l'écran 1.

Le ou les détecteurs 3 sont par exemple des capteurs de présence ou de proximité, qui détectent simplement la présence de la main de l'utilisateur U dans les zones C1, C2, qui sont ici des cônes allongés parallèlement au bord de l'écran le plus proche du détecteur 3, approchant ainsi un plan dans un espace de détection E.

Les détecteurs 3 génèrent au moyen de sources de lumière 5 des faisceaux de lumière selon des directions privilégiées autour des zones C1, C2, représentés par des flèches en pointillés orientées dans le sens de propagation, dans l'espace de détection E situé devant l'écran 1. Lorsque l'utilisateur U amène sa main dans ledit espace de détection E, sa main coupe une partie des faisceaux des détecteurs 3.

La main de l'utilisateur U réfléchit ou diffuse alors une partie de la lumière du faisceau vers le détecteur 3, où cette lumière réfléchie ou diffusée est reçue par un détecteur photovoltaïque **11** et interprétée comme détection de la main de l'utilisateur U dans l'espace de détection E au niveau du faisceau intersecté.

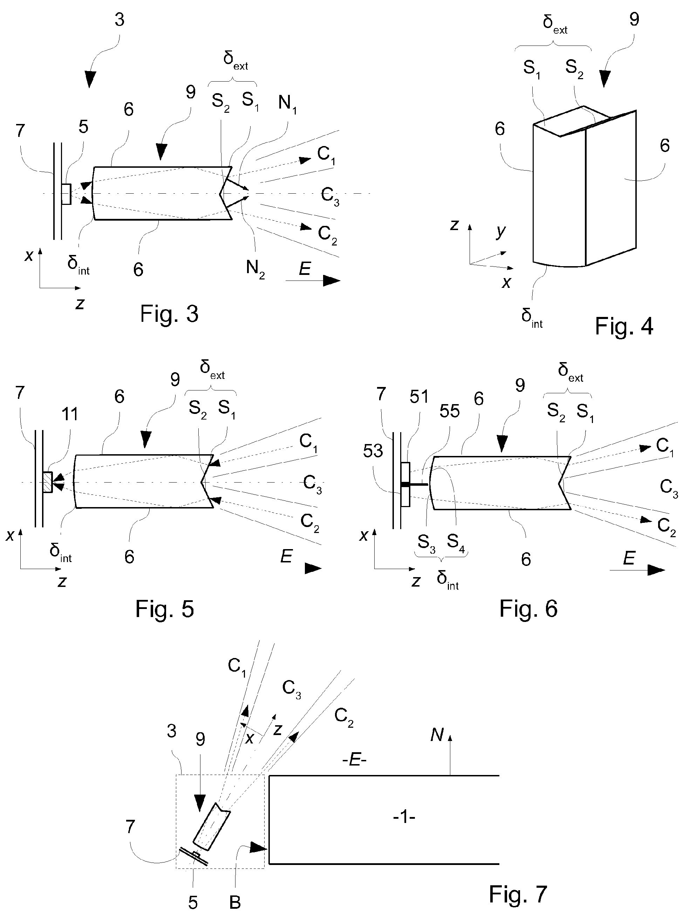

La (les) source(s) de lumière 5 et le(s) détecteur(s) photovoltaïque(s) **11** sont associés à des guides de lumière non représentés en figure 2 et détaillés sur les figures 3 à 13.

Pour permettre un positionnement et un suivi de mouvements de la main de l'utilisateur U, l'espace de détection est quadrillé par des faisceaux issus des détecteurs 3. Les faisceaux C1, C2 peuvent en particulier être réalisés sous forme de cônes, dont le sommet est situé au niveau du détecteur 3, allongés dans une direction et fins (quelques degrés) dans l'autre. Les faisceaux C1, C2 sont en particulier orientés dans des directions inclinées avec des angles croissants par rapport à la normale N à l'écran 1 en direction de l'intérieur de l'espace de détection E, et séparés par une zone C3 elle aussi en faisceau conique dans laquelle la luminosité émise ou détectée est moindre.

En utilisant un ensemble de faisceaux de cette forme, avec une partie des faisceaux associée à un premier détecteur 3 vertical et orientée selon une longueur de l'écran 1, et une autre partie des faisceaux associée à un deuxième détecteur 3 horizontal orientés selon la largeur de l'écran 1, on peut réaliser un quadrillage de l'espace de détection E. En détectant et en enregistrant quels faisceaux sont coupés à quel instant par la main de l'utilisateur U, on peut détecter la présence et analyser des mouvements simples de la main de l'utilisateur U dans l'espace de détection E.

Le détecteur 3 peut alors faire partie d'un détecteur d'approche, détectant simplement l'entrée dans l'espace E et l'approche de l'écran 1 de la main de l'utilisateur U en détectant la présence de la main de l'utilisateur U dans chacun des faisceaux C1, C2 de façon successive.

En alternative, le détecteur 3 peut être utilisé dans le cadre d'une interface à interprétation de gestes, l'utilisateur U réalise alors des gestes dans l'espace de détection E pour contrôler une ou plusieurs fonctions et organes du véhicule, en particulier en combinaison avec l'écran 1.

Pour détecter et interpréter des gestes simples tels que des balayages verticaux ou horizontaux, des figures géométriques simples (croix, cercles, vagues etc.), une résolution relativement faible est requise, mais une pluralité de faisceaux (entre trois et six typiquement selon la taille de l'écran 1) est toutefois requise.

Une unité d'émission de lumière d'un mode de réalisation d'un détecteur 3 qui coopère avec une unité associée de détection de lumière, est montrée schématiquement en vue en coupe en figure 3.

Cette unité d'émission de lumière comporte une source de lumière, ici une diode électroluminescente 5, émettant de la lumière dans un domaine spectral invisible pour l'œil humain, par exemple dans le domaine infrarouge, et un guide de lumière 9.

Cette diode électroluminescente 5 est disposée sur un circuit imprimé 7, réalisé notamment sous forme de plaque de résine sur laquelle des pistes métalliques sont gravées. Le circuit imprimé 7 assure en particulier l'alimentation électrique de la diode électroluminescente 5 en étant relié à une source de courant électrique, par exemple un adaptateur de puissance puisant du courant électrique de la batterie du véhicule. La diode électroluminescente 5 et le circuit imprimé 7 sont situés d'un côté opposé à l'espace de détection E du détecteur 3, dénommé côté intérieur ci-après.

En alternative, une diode laser de type VCSEL (« vertical cavity surface emitting laser » ou laser à cavité verticale émettant par la surface en français) peut être utilisée, en combinaison avec un dispositif optique tel qu'une lentille surmoulée pour générer un faisceau de lumière conique.

Le circuit imprimé 7 définit un plan xy, la direction globale de propagation de la lumière définit une direction z, les directions xyz formant ici un repère orthogonal. Dans les modes de réalisation privilégiés, la direction longitudinale transverse y est parallèle au bord de l'écran 1 contre lequel le détecteur 3 doit être disposé.

La direction y est parallèle au bord de l'écran 1 le long duquel le détecteur 3 est disposé. De ce fait, la direction y peut, dans certains modes de réalisation, se confondre avec une direction ou axe longitudinale du guide de lumière 9. La direction x, orthogonale dans le plan du circuit imprimé 7 est désignée comme épaisseur. La direction z sera ci-après nommée hauteur, et est par exemple parallèle à un axe optique des guides de lumière 9 mentionnés.

Le faisceau lumineux issu de la diode électroluminescente 5 est capté par un guide de lumière 9, réalisé en matériau translucide ou transparent dans le domaine spectral de la diode électroluminescente 5, par exemple du polycarbonate, notamment moulé par injection. Le guide de lumière 9 est représenté en perspective en figure 4.

Le guide de lumière 9 comporte un corps allongé selon la direction longitudinale y et relativement fin dans la direction de l'épaisseur x orthogonale à y. Par exemple, l'épaisseur selon la direction x du corps du guide de lumière 9 est comprise entre 5 et 20mm, tandis que la longueur dans la direction y est comprise entre 40mm et la longueur totale du côté de l'écran 1, ou plus généralement de l'élément d'interface le long duquel le détecteur 3 est disposé.

Le guide de lumière 9 comporte un dioptre intérieur $\delta_{int}$ et un dioptre extérieur $\delta_{ext}$.

Le dioptre intérieur $\delta_{int}$ est disposé en face du circuit imprimé 7, en vis-à-vis de la diode électroluminescente 5, et le dioptre extérieur $\delta_{ext}$ est disposé du côté opposé selon la direction z, en direction de l'espace de détection E.

Le dioptre intérieur $\delta_{int}$ est réalisé plan, en particulier parallèle au circuit imprimé 7, ou bien courbé dans le plan xz ou yz, ou bien encore sous forme de lentille convergente, dont le foyer est alors situé à hauteur du circuit imprimé 7, en particulier au niveau de la position attendue, à l'état assemblé du détecteur 3, de la diode électroluminescente 5. La forme du dioptre intérieur $\delta_{int}$ sert alors en particulier à former un front d'onde de forme connue et contrôlée, pour une meilleure mise en forme des faisceaux coniques obtenus.

Dans le mode de réalisation de la figure 3, le dioptre intérieur $\delta_{int}$ est un dioptre d'entrée : la lumière issue de la diode électroluminescente 5 est recueillie par ledit dioptre intérieur $\delta_{int}$ et réfléchie par réflexion totale sur les parois de guidage 6 en yz.

Du côté éloigné selon la hauteur z du circuit imprimé 7, portant la diode électroluminescente 5, à l'extrémité opposée au dioptre intérieur $\delta_{int}$ se trouve le dioptre extérieur $\delta_{ext}$ du guide de lumière 9, qui est un dioptre de sortie dans le mode de réalisation de la figure 3.

Ce dioptre extérieur $\delta_{ext}$ comporte deux surfaces transverses planes S1, S2, distinctes et inclinées l'une par rapport à l'autre. En particulier, leurs normales respectives N1 et N2 sont inclinées avec un angle compris entre 10° et 120°, en particulier de l'ordre de 20° à 90°.

Le dioptre extérieur $\delta_{ext}$ est de section transverse (selon le plan xz) en forme de V concave.

Les surfaces planes S1, S2 conjuguent chacune de la lumière entre d'une part deux portions séparées C1, C2 de l'espace de détection E et le dioptre

intérieur $\delta_{int}$ d'autre part. Par « conjuguer » on entend ici que, selon le sens de propagation de la lumière, soit la lumière entrant dans le dioptre intérieur $\delta_{int}$ est émise dans les cônes C1, C2, soit la lumière entrant dans les surfaces planes S1, S2 à rayons contenus dans les cônes C1, C2 est émise par le dioptre intérieur $\delta_{int}$.

Dans le mode de réalisation de la figure 3, le dioptre intérieur $\delta_{int}$ est un dioptre d'entrée, et le dioptre extérieur $\delta_{ext}$ est un dioptre de sortie.

La lumière sortant par la surface S1 dudit dioptre extérieur $\delta_{ext}$ est donc émise dans un cône C1 allongé selon la direction transverse y, et peu ouvert dans le plan xz de la figure 3. Le faisceau émis est donc centré autour d'un plan transverse incliné. L'inclinaison dudit plan est fonction de la direction de la normale N1 de la surface S1 et de l'indice du matériau transparent du guide de lumière 9.

De même la lumière sortant par la surface S2 est émise dans un cône allongé transversalement C2 qui est séparé du premier cône d'émission C1 par un troisième cône allongé C3 dans lequel peu voire pas de lumière est émis.

L'inclinaison du deuxième cône allongé C2 par rapport à l'axe z de propagation est à nouveau contrôlée par la normale N2 de la surface S2 et l'indice du matériau transparent du guide de lumière 9.

Le détecteur 3 comporte alors en outre un détecteur de lumière (par exemple l'unité de détection de lumière représentée en figure 5 et qui sera détaillé plus loin) qui capte de la lumière issue d'une portion importante voire de la totalité de l'espace de détection E situé par exemple sur le circuit imprimé 7, et décalé par rapport à la diode électroluminescente 5, selon la direction x et/ou y.

En alternative, le détecteur de lumière peut être déporté sur un autre circuit imprimé 7, et former un module relativement séparé du module générant les faisceaux C1, C2.

La figure 3 comporte le tracé de deux rayons de lumière issus de la diode électroluminescente 5, représentés par des lignes pointillées orientées selon le sens de propagation. Les rayons sont émis par la diode électroluminescente 5, l'un incliné vers le haut de la figure 3, l'autre vers le bas.

Les rayons lumineux entrent dans le guide de lumière 9 par le dioptre intérieur $\delta_{int}$ où ils sont réfractés une première fois.

Le rayon lumineux incliné vers le haut est réfléchi par la paroi de guidage 6 supérieure du guide de lumière 9 par réflexion totale, et sort ensuite du guide de lumière 9 par le dioptre extérieur $\delta_{ext}$ où il est réfracté une deuxième fois au niveau de la surface S1 et émis dans le cône allongé C1 associé.

Le rayon lumineux incliné vers le bas est réfléchi par la paroi de guidage 6 inférieure du guide de lumière 9 par réflexion totale, et sort ensuite du guide de lumière 9 par le dioptre extérieur $\delta_{ext}$ où il est réfracté une deuxième fois au niveau de la surface S2 et émis dans le cône allongé C2 associé.

Lorsque la main de l'utilisateur U passe dans un des cônes allongés C1, C2, le détecteur de lumière capte la lumière émise par la diode électroluminescente 5 dans lesdits cônes allongés C1, C2, et cette lumière captée est utilisée pour déterminer approximativement une position de la main de l'utilisateur U.

En suivant approximativement la position de la main de l'utilisateur U au cours du temps à partir d'une séquence enregistrée des cônes allongés C1, C2 intersectés au cours du temps, des gestes de l'utilisateur U peuvent être déterminés et interprétés pour lui permettre d'interagir avec le module d'interface 100.

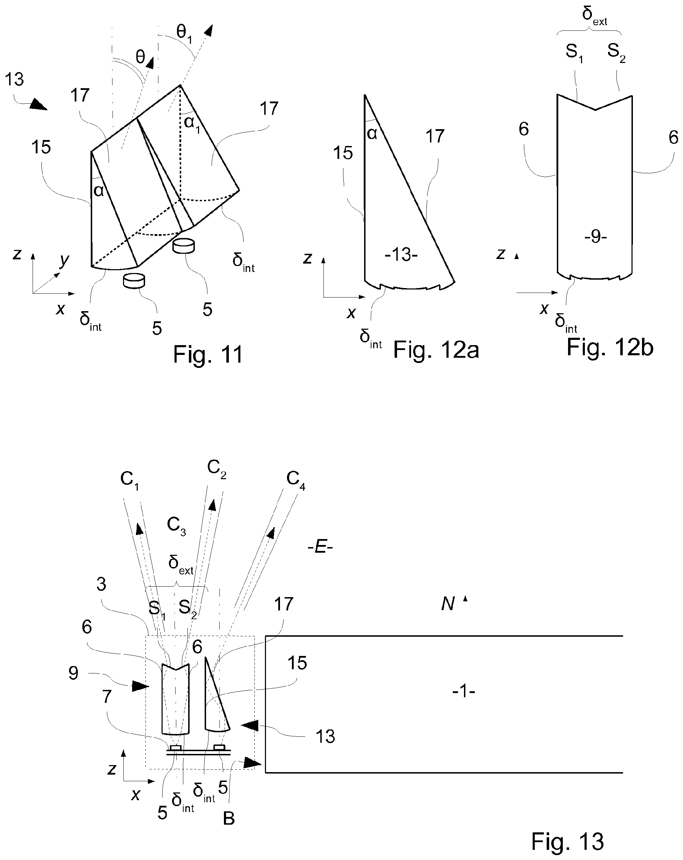

Pour distinguer lequel des cônes C1, C2 est intersecté par l'utilisateur U, un suivi au cours du temps des variations de luminosité détectées peut être utilisé : l'un des cônes C1, C2 est généralement plus incliné par rapport à la surface de l'écran 1 (C1 en figures 7 et 13), ou plus proche de la normale N dudit écran 1. Ce cône plus incliné C1 est quasi systématiquement intersecté en premier lorsque l'utilisateur U approche sa main selon la direction perpendiculaire à l'écran 1 ou bien à partir d'une position au-delà des bords latéraux de l'écran 1.

La figure 5 illustre une unité de détection de lumière d'un mode de réalisation d'un détecteur 3. Il s'agit d'un « pendant » de la figure 3. En effet, en figure 5, le dioptre intérieur $\delta_{int}$ est un dioptre de sortie, et le dioptre extérieur $\delta_{ext}$ est un dioptre d'entrée.

En face du dioptre intérieur $\delta_{int}$ se trouve, dans ce mode de réalisation alternatif, un détecteur de lumière 11 (à la place de la diode électroluminescente 5), par exemple une diode photovoltaïque, avec un éventuel dispositif optique de guidage de lumière comportant par exemple une lentille surmoulée, et/ou des parois tubulaires permettant de sélectionner un cône de détection spécifique afin d'éviter de capter des photons parasites.

Le dioptre intérieur $\delta_{int}$ est alors un dioptre de sortie situé, à l'état monté du guide de lumière 9 face au détecteur de lumière 11. Le dioptre extérieur $\delta_{ext}$ capte alors, du fait de ses deux surfaces S1 et S2, la lumière réfléchie par la main de l'utilisateur U dans les deux cônes C1, C2 allongés transversalement autour des deux plans inclinés dans l'espace de détection E, et envoie la lumière de chacun des deux plans inclinés vers son dioptre intérieur $\delta_{int}$ où elle est captée par le détecteur de lumière 11.

Le trajet de deux rayons lumineux est représenté en figure 5, l'un entrant au niveau du dioptre extérieur $\delta_{ext}$ par le cône allongé supérieur C1 en figure 5, l'autre par le cône allongé C2 inférieur en figure 5.

Les deux rayons lumineux sont guidés par réflexion totale sur les parois de guidage 6 (en yz) du guide de lumière 9 jusqu'au dioptre intérieur $\delta_{int}$ où ils sont réfractés puis captés par le détecteur de lumière 11.

On comprend ainsi que dans ce mode de réalisation de la figure 5, en inversant simplement la position des diodes 5 et des détecteurs 11, on obtient un capteur de geste 3 qui fonctionne avec des rayons qui suivent des trajets similaires, mais simplement en sens inverse : ils sont captés là où ils sont initialement émis dans le mode de réalisation de la figure 3, et émis là où ils sont initialement captés dans le mode de réalisation de la figure 3.

En alternative ou en complément, le capteur de geste 3 peut comporter respectivement plusieurs détecteurs 11 dans le cas de la figure 3, ou plusieurs diodes 5 dans le cas de la figure 5. Ces détecteurs 11 ou diodes 5 captent ou émettent alors de la lumière spécifiquement dans une portion de l'espace de détection E contenant un seul des cônes C1, C2. En déterminant à quel détecteur 11 ou quelle diode 5 correspond à la lumière captée ou émise, on peut alors savoir quel cône C1, C2 est intersecté.

Le détecteur 3 comporte alors au moins une source de lumière, comportant notamment une ou plusieurs diodes électroluminescentes 5, qui émet de la lumière dans tout l'espace de détection E. Les diodes électroluminescentes 5 de la source de lumière peuvent notamment être disposées sur le même circuit imprimé 7 que les détecteur de lumière 11, ou bien former un module relativement séparé, avec son propre circuit imprimé 7.

La figure 6 est une représentation en coupe (xz) d'un mode de réalisation alternatif de détecteur 3 dérivé du mode de réalisation de la figure 3, permettant une meilleure distinction logique du cône intersecté C1 ou C2.

Dans ce mode de réalisation, le dioptre intérieur $\delta_{int}$ comporte deux surfaces S3 et S4 formant des lentilles convergentes, conjuguées chacune avec une des surfaces S1, S2 du dioptre extérieur $\delta_{ext}$. Dans le mode de réalisation de la figure 6, le dioptre intérieur $\delta_{int}$ est situé en face de deux diodes électroluminescentes 51, 53, entre lesquelles est disposée une lame séparatrice 55, opaque dans le domaine spectral utilisé.

La lumière issue de la première diode 51 est guidée par réflexion interne jusqu'à la surface S1 et émise majoritairement dans le cône allongé C1 associé. De même, la lumière issue de la deuxième diode 53 est guidée par réflexion interne jusqu'à la surface S2 et émise majoritairement dans le cône allongé C2 associé.

En allumant en alternance rapide (fréquence supérieure à plusieurs dizaines de Hertz) chacune des diodes 51, 53 et en déterminant dans quelle fenêtre temporelle la lumière captée a été émise, il est alors possible de déterminer rapidement quel cône lumineux C1 ou C2 est intersecté par la main de l'utilisateur U dans l'espace de détection E en utilisant un seul détecteur de lumière.

Un autre mode de réalisation (non représenté) est obtenu de façon analogue à partir du mode de réalisation de la figure 5. Le dioptre intérieur $\delta_{int}$ comporte alors deux surfaces formant des lentilles convergentes, conjuguées chacune avec une des surfaces S1, S2 du dioptre extérieur $\delta_{ext}$, et en face dudit dioptre intérieur $\delta_{int}$ se trouvent alors deux détecteurs de lumière 11 séparés par une lame séparatrice 55 opaque au domaine spectral utilisé.

La lumière entrant par chacun des cônes C1 et C2 est alors majoritairement guidée vers l'un ou l'autre des détecteurs de lumière 11 selon un sens de propagation inverse de celui de la figure 6.

La figure 7 illustre la disposition des éléments des précédentes figures par rapport à l'écran 1 dans le cadre d'un détecteur 3 disposé le long d'un bord B dudit écran 1.

Le guide de lumière 9 est disposé avec son axe optique z incliné par rapport à la normale N verticale de l'écran 1 qui est ici représenté horizontal. Le circuit imprimé 7 portant ici la diode électroluminescente 5, qui est orthogonal audit axe optique z, est lui aussi incliné par rapport au plan horizontal de la figure 7. L'angle d'inclinaison est par exemple un angle compris entre 0° et 45°. L'angle 0°, correspondant au cas où xy est coplanaire à l'écran 1, est préférable si possible, puisqu'un seul circuit imprimé 7 peut alors connecter à la fois les éléments du capteur 3 et de l'écran 1 (voir figure 13).

Le détecteur 3 peut alors être recouvert d'un cache transparent au domaine spectral utilisé (infrarouges), et opaque dans le domaine visible pour l'œil humain. On peut ainsi rendre le ou les capteurs de gestes 3 invisibles pour l'utilisateur U. Le cache peut soit être un cadre rigide formant éventuellement aide au maintien et à la fixation de l'écran 1, ou bien être imprimé sur un film ou une plaque protectrice qui recouvre l'écran 1 et s'étend au-delà des bords dudit écran 1 de manière à recouvrir le ou les capteurs de gestes 3 disposés le long des bords de l'écran 1 en même temps que ledit écran 1.

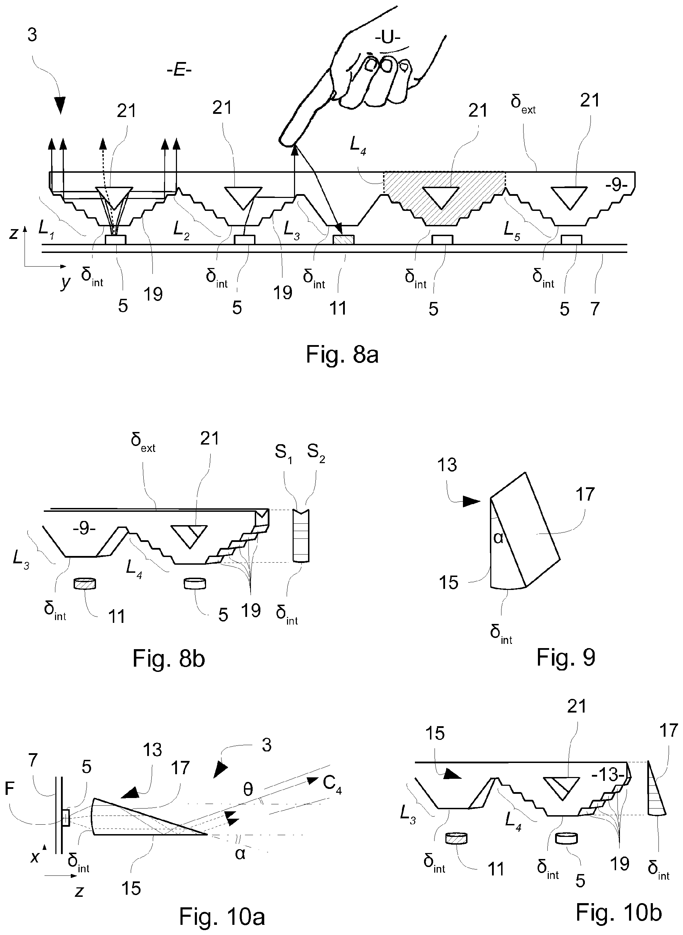

La figure 8a est une vue dans le plan yz d'un guide de lumière 9 avec le circuit imprimé 9 en dessous, selon un mode de réalisation particulier adapté aux écrans 1 de taille importante. La figure 8b est une vue en perspective d'une portion longitudinale (en y) du guide de lumière 9 de la figure 8a, avec la section selon le plan vertical transverse xz correspondante.

Dans ce mode de réalisation, le guide de lumière 9 comporte une pluralité de dioptres intérieurs $\delta_{int}$ situés chacun en face d'une diode électroluminescente 5 ou d'un détecteur de lumière 11, le long de l'axe transverse y.

Le mode de réalisation de la figure 8 comporte en particulier quatre diodes électroluminescentes 5 et un détecteur de lumière 11, avec deux diodes électroluminescentes 5 disposées de chaque côté du détecteur de lumière 11 sur le circuit imprimé 7 le long d'une ligne transverse sur le circuit imprimé 7.

Les dioptres intérieurs $\delta_{int}$ sont séparés par des parois inclinées 19, évasées en direction de l'espace de détection E. Les parois inclinées 19 délimitent ainsi des lobes numérotés L1 à L5 en partant de la gauche de la figure 8. Le lobe central L3 est celui en face du détecteur de lumière 11. Les lobes L1 à L5 sont en forme de pyramide tronquée, dont le dioptre intérieur $\delta_{int}$ est au niveau de la pointe tronquée, située vers l'intérieur du module d'interface 100.

Le lobe L4 est hachuré en figure 8a, la figure 8b représente seulement deux lobes L1, L3 considérés séparément.

Le guide de lumière 9 est en particulier réalisé d'une seule pièce : les lobes L1 à L5 sont unis par leur portion supérieure en se rejoignant par leur côté évasé en direction du dioptre extérieur $\delta_{ext}$. D'autres modes de réalisation peuvent être obtenus en réalisant séparément chacun des lobes L1 à L5, et en les disposant alignés parallèlement au bord de l'écran 1 selon la direction transverse y.

Les lobes L1, L2, L4 et L5 (ceux situés en face d'une diode électroluminescente 5) ont des parois latérales évasées 19 réalisées sous forme de marches, alternant des faces dans le plan xy du circuit imprimé 7 et des faces inclinées formant l'évasement.

Le lobe L3 faisant face au détecteur de lumière 11 présente des parois latérales évasées 19 droites, et une section en trapèze.

Les lobes L1, L3 de la figure 8b sont pour l'un L1 à parois en forme de marches, et pour l'autre L3 à section en trapèze.

Les lobes L1, L2, L4 et L5 comprennent en leur centre des cavités prismatiques 21 selon la direction transverse x perpendiculaire à l'axe le long duquel sont alignés lesdits lobes. Les cavités prismatiques 21 des lobes L1, L2, L4 et L5 ont une section selon le plan yz de la figure 8 en forme de triangle, en particulier isocèle, dont la base est orientée vers l'espace de détection E, et la pointe est orientée vers la diode électroluminescente 5.

Ces cavités prismatiques 21 permettent de dévier par réflexion totale une partie des rayons lumineux émis par la diode 5 vers les parois inclinées 19 avec une inclinaison transverse importante (bords transverses du faisceau). Au niveau desdites parois inclinées 19, ces rayons lumineux sont à nouveau déviés par réflexion totale en direction du dioptre extérieur $\delta_{ext}$ où ils sont émis en direction de l'espace de détection E dans les cônes C1 et C2 (non représentés en figure 8a).

Des rayons lumineux suivant un tel parcours sont représentés en lignes pleines au niveau du lobe L1 à gauche en figure 8a.

Les rayons lumineux relativement centraux et axiaux du faisceau émis par la diode électroluminescente 5 considérée sont simplement réfractés au niveau de la cavité prismatique 21, et forment une portion centrale relativement peu déviée des faisceaux lumineux émis par chacun des lobes L1, L2, L4 et L5.

Un rayon suivant un tel parcours est représenté en ligne pointillée au niveau du lobe L1 à gauche en figure 8a.

Les lobes L1, L2, L4 et L5 avec leurs cavités prismatiques 21 permettent ainsi de répartir de façon relativement uniforme la lumière des diodes électroluminescentes 5 le long de la direction transverse y parallèle au bord de l'écran 1 dans les cônes C1 et C2.

En alternative ou en complément, le détecteur 3 peut comporter un ou plusieurs seconds guides de lumière 13 tels que représentés en figure 9.

Le second guide de lumière 13 est représenté en figure 9 en vue en perspective, à la manière du premier guide de lumière 9 en figure 4.

Le même second guide de lumière 13 est représenté en vue dans le plan latéral xz en figure 10a, dans le cadre d'un détecteur 3. La figure 10a est similaire à la figure 3 ou 5.

Le second guide de lumière 13 comporte un dioptre intérieur $\delta_{int}$ situé, à l'état monté, face au circuit imprimé 7 portant une source de lumière 5, ici une diode électroluminescente, ou bien un détecteur de lumière 11. Le dioptre intérieur $\delta_{int}$ forme une lentille convergente dont le foyer F est situé au niveau d'une position attendue de la diode électroluminescente 5 ou du détecteur de lumière 11.

Le second guide de lumière 13 est de forme générale en prisme, avec une première face plane 15, sensiblement contenue dans le plan yz, et une deuxième face plane 17 inclinée par rapport à la première face plane 15 avec un angle $\alpha$.

Le second guide de lumière 13 peut notamment être obtenu par moulage d'un matériau plastique tel que du polycarbonate, en particulier par moulage par injection.

Dans le mode de réalisation de la figure 10a, le dioptre intérieur $\delta_{int}$ est un dioptre d'entrée : le dioptre intérieur $\delta_{int}$ fait face à une diode électroluminescente 5 et le faisceau lumineux émis par ladite diode électroluminescente 5 entre dans le second guide de lumière 13 via le dioptre intérieur $\delta_{int}$.

Le faisceau lumineux émis par la diode électroluminescente 5, qui se trouve au niveau du foyer F est collimaté par le dioptre intérieur $\delta_{int}$. Les rayons parallèles et longitudinaux (axe z) dans le second guide de lumière 13 sont réfléchis une première fois par réflexion totale sur la deuxième face plane 17, puis une seconde fois par réflexion totale sur la première face plane 15.

Les rayons lumineux rencontrent alors une deuxième fois la deuxième face plane 17, mais ils ont alors un angle d'incidence suffisamment important pour ne pas être totalement réfléchis, et sortent alors par ladite deuxième face plane 17 avec un angle $\theta$ par rapport à l'axe z.

La deuxième face plane 17 forme ainsi à la fois une paroi réfléchissante et un dioptre de sortie $\delta_{ext}$ du second guide de lumière 13.

Le second guide de lumière 13 émet ainsi un faisceau selon un cône C4 allongé selon la direction transverse y, centré autour d'un plan incliné avec la direction z d'un angle $\theta$, avec une ouverture angulaire relativement faible.

L'angle $\alpha$ et l'angle $\theta$ sont liés par la relation :

$$\cos(\alpha+\theta) = (1+\varepsilon)\, n_{GL} * \cos 3\alpha,$$

dans laquelle :

- ε un nombre compris entre -0,1 et 0,1 ;
- et $n_{GL}$ l'indice du matériau transparent dont est constitué le second guide de lumière 13.

Le nombre ε rend ici compte des incertitudes de dimensionnement et de fabrication du second guide de lumière 13 et de disposition des diodes 5 et/ou capteurs 11, et peut être plus petit si une précision suffisante le permet. Le nombre ε peut alors, par exemple, être compris entre -0,01 et 0,01 (1% d'erreur) avec un usinage et un assemblage plus précis.

En particulier, une égalité rigoureuse (aux tolérances d'usinage près) peut être obtenue, l'angle α et l'angle θ sont alors sensiblement liés par la relation :

$$\cos(\alpha+\theta) = n_{GL} * \cos 3\alpha.$$

Ce cas de figure correspond à ε = 0 ou de façon plus réaliste à un taux d'erreur négligeable.

Selon un autre mode de réalisation selon lequel un détecteur photovoltaïque 11 est disposé à la place de la diode électroluminescente 5, le dioptre intérieur $\delta_{int}$ est un dioptre de sortie. Le circuit imprimé 7 porte alors un détecteur de lumière 11, situé en face du dioptre intérieur $\delta_{int}$, et qui recueille de la lumière entrant dans le second guide de lumière 13 par le cône C4 par la deuxième face plane 17, et sort dudit second guide de lumière 13 par le dioptre intérieur $\delta_{int}$ en étant focalisée au niveau du foyer F où se trouve le détecteur de lumière 11.

Le second guide de lumière 13 permet d'obtenir des angles d'émission θ importants, en particulier supérieurs à 25°, et notamment compris entre 30° et 45° en utilisant du polycarbonate d'indice $n_{GL}$ usuel, c'est-à-dire compris entre 1,4 et 1,6.

Lorsque le dioptre intérieur $\delta_{int}$ est un dioptre d'entrée, le détecteur 3 comporte en outre au moins un détecteur de lumière 11, qui capte la lumière réfléchie par la main de l'utilisateur U dans la totalité de l'espace de détection E, la détermination approximative de la position de la main de l'utilisateur U s'effectuant en déterminant de quels faisceaux intersectés provient la lumière détectée.

Lorsque le dioptre intérieur $\delta_{int}$ est un dioptre de sortie, le détecteur 3 comporte en outre au moins une source de lumière 5, qui émet dans tout l'espace de détection de la lumière, réfléchie par la main de l'utilisateur U et captée lorsqu'elle est réfléchie au niveau du détecteur 3 selon les faisceaux C1, C2 ou C4, la détermination approximative de la position de la main de l'utilisateur U s'effectuant en déterminant dans quels faisceaux C1, C2 ou C4 la lumière détectée est incidente.

En référence à la figure 10b, la forme longitudinale dans le plan yz du second guide de lumière 13 peut être identique à celle du guide de lumière 9 représenté en figure 8a. La figure 10b est une vue en perspective d'une portion longitudinale (en y) d'un second guide de lumière 13 avec la forme longitudinale de la figure 8a, avec la section en forme générale de prisme selon le plan vertical transverse xz correspondante.

Le second guide de lumière 13 comporte alors lui aussi une pluralité de lobes L1, L2, L3, L4 et L5 (sur la figure 10b, seuls les lobes L3 et L4 sont représentés) selon la direction y, avec chacun un dioptre intérieur $\delta_{int}$ situé en vis-à-vis d'une diode électroluminescente 5 ou d'un détecteur de lumière 11.

Un sous-ensemble L1, L2, L4 et L5 des lobes peut alors présenter des parois latérales évasées 19 réalisées sous forme de marches, et au moins un L3 des lobes peut présenter une section trapézoïdale.

Une partie des lobes L1 à L5 peut aussi comporter des cavités prismatiques 21 telles que décrites dans le cas des figures 8a, 8b.

La lumière est alors émise dans le cône C4 avec une intensité relativement uniforme selon la direction y parallèle au bord de l'écran 1 dans laquelle ledit cône C4 est allongé.

La figure 11 illustre un mode de réalisation particulier, dans lequel le second guide de lumière 13 comporte plusieurs sections transverses selon l'axe y, avec chacune un dioptre intérieur $\delta_{int}$. Les premières faces planes 15 de ces sections transversales sont situées dans un même plan, et les deuxièmes faces planes 17 inclinées par rapport aux premières faces planes forment avec celles-ci deux angles α et α1 qui sont différents. Il en résulte une «marche» dans le plan xz au niveau de l'interface entre les deux portions transverses.

Le second guide de lumière 13 est alors placé en vis-à-vis de deux diodes électroluminescentes 5 (figure 11) ou bien face à deux détecteurs de lumière 11 (non représenté) alignés selon la direction transverse y.

Le guide de lumière 13 ainsi obtenu émet donc deux faisceaux inclinés selon des angles θ et $\theta_1$ reliés aux deux angles α et α1 par les relations :

$$\cos(\alpha+\theta) = (1+\varepsilon)\, n_{GL} * \cos 3\alpha$$

et

$$\cos(\alpha_1+\theta_1) = (1+\varepsilon)\, n_{GL} * \cos 3\alpha_1.$$

D'autres modes de réalisation peuvent être obtenus avec plus de deux sections transverses, ayant chacune une inclinaison $\alpha$, $\alpha_1$, $\alpha_2$,..., $\alpha_n$ potentiellement différente, et autant de diodes électroluminescentes 5 et/ou de détecteurs de lumière 11.

Le second guide de lumière 13 émet ou recueille alors selon des portions transverses de faisceau avec différents angles d'inclinaison $\theta$, $\theta_1$, $\theta_2$,..., $\theta_n$.

En particulier, les sections transverses à inclinaison différentes peuvent correspondre à des lobes L1 à L5 en partant d'un guide de lumière avec une forme longitudinale dans le plan yz telle qu'en figure 10b.

Les sections transverses ont alors chacune un

dioptre intérieur δ$_{int}$ en face respectivement d'une des diodes électroluminescentes 5 ou d'un détecteur de lumière 11, qui peuvent être allumées selon des fenêtres temporelles différentes pour permettre d'identifier quelle portion transverse de faisceau est intersectée par l'utilisateur U.

Les figures 12a et 12b sont des vue en coupe selon le plan xz de modes de réalisation alternatifs des premier et second guide de lumière 9 et 13 respectivement, dans lesquelles le dioptre intérieur δ$_{int}$ est réalisé sous forme d'une lentille de Fresnel, et la source de lumière 5 ou le détecteur de lumière 11 en face du dioptre intérieur est situé au niveau du foyer de la lentille de Fresnel.

Leur dioptre intérieur δ$_{int}$ présente alors des anneaux concentriques emboîtés, dont la surface extérieure se conforme par segments à une lentille convexe.

On peut ainsi rendre les guides de lumière 9, 13 plus compacts selon la direction z.

Le second guide de lumière 13 peut lui aussi présenter une section transverse selon le plan yz telle que représentée en figure 8, avec plusieurs dioptres intérieurs δ$_{int}$, alignés selon un axe transverse y du guide de lumière, destinés à être disposés chacun au niveau d'une source de lumière 5 ou d'un détecteur de lumière 11, séparés par des parois délimitant des lobes L1 à L5 avec des cavités prismatiques 21.

La figure 13 est une vue en coupe partielle dans le plan transverse xz du module d'interface 100 comportant l'écran 1 et le détecteur 3.

La figure 13 est semblable à la figure 7, mais en figure 13, le détecteur 3 comporte un premier guide de lumière 9 tel que représenté dans les figures 3 à 8 et 12b, et un second guide de lumière 13 tel que représenté dans les figures 9 à 11 et 12a.

Le premier et le second guide de lumière 9, 13 sont disposés sur un même circuit imprimé 7, avec leurs axe transverse y parallèles entre eux et au bord de l'écran 1, l'axe z orthogonal au circuit imprimé 7 est incliné par rapport à la normale N à l'écran 1, par exemple d'un angle compris entre 10° et 45°.

Les faisceaux C1, C2 et C4 des guides de lumière 9 et 13 sont alors disposés dans l'espace de détection E avec des angles par rapport à la normale N à l'écran 1 croissants.

Le premier faisceau émis par le premier guide de lumière 9 dans le cône C1 est presque vertical, formant un premier plan de détection. Le deuxième faisceau dans le cône C2 du premier guide de lumière 9 est plus incliné que le premier faisceau dans le cône C1, et forme un deuxième plan de détection. Le troisième faisceau émis dans le cône C4 est encore plus incliné par rapport à la normale N à l'écran 1.

Le module d'interface 100 est notamment pourvu d'au moins un deuxième détecteur 3, notamment identique au premier, situé le long d'un bord perpendiculaire de l'écran 1.

Avec deux capteurs de gestes 3 perpendiculaires avec chacun trois plans de détection, l'espace de détection E est divisé en neuf (3²) parcelles dans le plan de l'écran 1, ce qui permet notamment l'interprétation de gestes simples tels que des balayages, cercles ou croix.

L'utilisation combinée des deux guides de lumière 9, 13 permet de placer l'électronique de génération et de détection de la lumière (sources 5 et détecteurs 11, adaptation et distribution de puissance, etc.) sur un seul circuit imprimé 7, au lieu de recourir à trois capteurs de gestes 3 orientés selon des directions différentes pour former chacun des trois plans de détection, ce qui suppose que chacun ait son propre circuit imprimé 7, orienté en fonction de la direction du détecteur 3 auquel il appartient.

Le détecteur 3 ainsi obtenu, et le module d'interface 100 qui l'intègre, est alors potentiellement plus compact, plus léger, et d'assemblage plus aisé. Il en résulte que le module d'interface 100 peut être intégré dans des habitacles de véhicule moins spacieux, ou bien en présence d'autres éléments d'interface adjacents.

**Revendications**

1. Module d'interface, en particulier pour habitacle de véhicule, à détection de présence ou de geste d'une partie du corps d'un utilisateur (*U*), comportant :

   ○ au moins une source de lumière (5), destinée à éclairer au moins une partie d'un espace de détection (E) du module d'interface,
   ○ au moins un détecteur de lumière (11);
   le module d'interface comportant un guide de lumière (9) comportant un corps en matériau transparent ou translucide guidant de la lumière par réflexion sur ses parois de guidage (6), comportant :

   ○ un dioptre intérieur (δ$_{int}$) à une des extrémités du corps en matériau transparent ou translucide, destiné à être dirigé vers l'au moins un détecteur de lumière (11) ou l'au moins une source de lumière (5),
   ○ un dioptre extérieur (δ$_{ext}$), situé à une extrémité opposée au dioptre intérieur (δ$_{int}$) du corps en matériau transparent,

   le dioptre extérieur comportant deux surfaces transverses distinctes (S$_1$, S$_2$), avec des normales pointant dans des directions différentes pour conjuguer de la lumière entre d'une part deux portions (C$_1$, C$_2$) séparées de l'espace de détection (E) et le dioptre intérieur (δ$_{int}$) d'autre part, le guide de lumière (9) étant configuré pour émettre ou recueillir la lumière dans deux portions (C$_1$, C$_2$) séparées de l'espace de détection (E);
   **caractérisé en ce que** l'au moins un détecteur de lumière (11) est destiné à détecter de la lumière renvoyée par une partie du corps d'un utilisateur (U) située dans l'espace de détection (E).

2. Module d'interface selon la revendication 1, **caractérisé en ce que** le dioptre intérieur ($\delta_{int}$) est un dioptre d'entrée situé, à l'état monté du guide de lumière, en face d'une source de lumière (5), et **en ce que** le dioptre extérieur ($\delta_{ext}$) est un dioptre de sortie qui répartit, du fait de ses deux surfaces transverses ($S_1$, $S_2$), la lumière de la source vers deux cônes ($C_1$, $C_2$) allongés transversalement (*y*) autour de deux plans inclinés dans l'espace de détection (E).

3. Module d'interface selon la revendication 1, **caractérisé en ce que** le dioptre intérieur ($\delta_{int}$) est un dioptre de sortie situé, à l'état monté du guide de lumière, en face d'un détecteur de lumière (11), et **en ce que** le dioptre extérieur ($\delta_{ext}$) est un dioptre d'entrée qui capte, du fait de ses deux surfaces transverses ($S_1$, $S_2$), la lumière de la source venant dans deux cônes ($C_1$, $C_2$) allongés transversalement autour de deux plans inclinés dans l'espace de détection, et envoie la lumière de chacun des deux plans inclinés vers son dioptre intérieur ($\delta_{int}$).

4. Module d'interface selon la revendication 1, 2 ou 3, **caractérisé en ce que** le dioptre extérieur ($\delta_{ext}$) comporte deux surfaces planes ($S_1$, $S_2$) inclinées dans un plan transverse (*xz*) pour former un dioptre extérieur ($\delta_{ext}$) concave.

5. Module d'interface selon l'une des revendications précédentes, **caractérisé en ce que** le le dioptre intérieur ($\delta_{int}$) comporte deux surfaces formant des lentilles convergentes, conjuguées chacune avec une des surfaces ($S_1$, $S_2$) du dioptre extérieur ($\delta_{ext}$).

6. Module d'interface selon l'une des revendications précédentes, **caractérisé en ce que** le guide de lumière (9) comporte une pluralité de dioptres intérieurs ($\delta_{int}$) disposés le long d'un axe transverse, et délimités par des parois latérales (19) évasées en direction de l'espace de détection (E).

7. Module d'interface selon la revendication précédente, **caractérisé en ce que** le guide de lumière (9) est réalisé d'une seule pièce, les parois latérales (19) évasées délimitant des lobes ($L_1$ à $L_5$) en forme de pyramide tronquée, la face tronquée formant les dioptres intérieurs ($\delta_{int}$).

8. Module d'interface selon la revendication 6 ou 7, **caractérisé en ce qu'**une partie des parois latérales (19) évasées des lobes ($L_1$ à $L_5$) est réalisée sous forme de marches, alternant des faces transversales et des faces inclinées formant l'évasement.

9. Module d'interface selon la revendication 8, **caractérisé en ce que** les lobes ($L_1$ à $L_5$) à parois évasées réalisées sous forme de marches comprennent des cavités prismatiques (21) selon la direction transverse perpendiculaire à l'axe le long duquel sont alignés lesdits lobes.

10. Module d'interface selon l'une des revendication 1 à 9, **caractérisé en ce qu'**il comporte un circuit imprimé (7), sur lequel est disposée une ligne de sources de lumière (5) et/ou de détecteurs, et **en ce qu'**il comporte un guide de lumière au moins selon la revendication 7, les sources de lumière (5) et/ou les détecteurs (11) étant disposées en face des lobes.

11. Module d'interface selon la revendication précédente, **caractérisé en ce que** le guide de lumière comporte un lobe à parois latérales (19) évasées lisses, et quatre lobes à parois latérales (19) réalisées sous forme de marches, répartis de part et d'autre du lobe à parois lisses, et **en ce qu'**il comporte un détecteur de lumière (11) disposé face au dioptre intérieur du lobe à parois lisses, et quatre diodes électroluminescentes disposées en face des dioptres intérieurs ($\delta_{int}$) des lobes à parois réalisées sous forme de marches.

12. Module d'interface selon l'une des revendications 10 à 11, **caractérisé en ce qu'**il comporte :

   • respectivement au moins deux sources de lumière (5) ou au moins deux capteurs de lumière (11), arrangés sur un circuit imprimé,
   • respectivement au moins un capteur (11) ou au moins une source de lumière (5), couvrant tout l'espace de détection (E),
   • le premier guide de lumière (9) selon l'une des revendications 1 à 11, disposé en face d'au moins une des sources de lumière ou un des capteurs de lumière du circuit imprimé,
   • un second guide de lumière (13) pour l'émission ou la réception d'un faisceau lumineux autour d'un plan incliné d'un angle θ par rapport à un axe optique (*z*) du guide de lumière, réalisé sous forme de prisme en matériau transparent d'indice $n_{GL}$ qui comporte :

      ○ un dioptre intérieur ($\delta_{int}$) destiné à faire face à un circuit imprimé (7) portant une source de lumière (5) ou un détecteur de lumière (11), formant une lentille convergente dont le foyer est situé au niveau d'une position attendue de la source (5) ou du détecteur de lumière (11),
      ○ une première face plane (15) orientée parallèlement à l'axe optique (*z*) du guide de lumière,

○ une deuxième face plane (17) inclinée par rapport à la première face plane (15) avec un angle $\alpha$, vérifiant $\cos(\alpha+\theta) = (1+\varepsilon)$ $n_{GL}.\cos3\alpha$ avec $\varepsilon$ un nombre compris entre -0,1 et 0,1.

**Patentansprüche**

1. Schnittstellenmodul, insbesondere für einen Fahrzeuginnenraum, mit Detektion der Anwesenheit oder Geste eines Körperteils eines Nutzers (U), umfassend:

   ○ mindestens eine Lichtquelle (5), die dazu bestimmt ist, mindestens einen Teil eines Detektionsraums (E) des Schnittstellenmoduls zu beleuchten,
   ○ mindestens einen Lichtdetektor (11); wobei das Schnittstellenmodul einen Lichtleiter (9) umfasst, der einen Körper aus transparentem oder transluzentem Material umfasst, der Licht durch Reflexion an seinen Leitwänden (6) leitet, umfassend:

   ○ eine innere Grenzfläche ($\delta_{int}$) an einem der Enden des Körpers aus transparentem oder transluzentem Material, die dazu bestimmt ist, zu dem mindestens einen Lichtdetektor (11) oder der mindestens einen Lichtquelle (5) gerichtet zu sein,
   ○ eine äußere Grenzfläche ($\delta_{ext}$), die an einem zu der inneren Grenzfläche ($\delta_{int}$) entgegengesetzten Ende des Körpers aus transparentem Material gelegen ist,

   wobei die äußere Grenzfläche zwei verschiedene Querflächen ($S_1$, $S_2$) mit in unterschiedliche Richtungen weisenden Normalen umfasst, um Licht zwischen einerseits zwei getrennten Abschnitten ($C_1$, $C_2$) des Detektionsraums (E) und der inneren Grenzfläche ($\delta_{int}$) andererseits zu koppeln, wobei der Lichtleiter (9) dazu ausgestaltet ist, das Licht in zwei getrennten Abschnitten ($C_1$, $C_2$) des Detektionsraums (E) zu emittieren oder aufzufangen, **dadurch gekennzeichnet, dass** der mindestens eine Lichtdetektor (11) dazu bestimmt ist, Licht zu detektieren, das von einem in dem Detektionsraum (E) gelegenen Körperteil eines Nutzers (U) zurückgeführt wird.

2. Schnittstellenmodul nach Anspruch 1, **dadurch gekennzeichnet, dass** die innere Grenzfläche ($\delta_{int}$) eine Eintrittsgrenzfläche ist, die im montierten Zustand des Lichtleiters gegenüber einer Lichtquelle (5) gelegen ist, und dass die äußere Grenzfläche ($\delta_{ext}$) eine Austrittsgrenzfläche ist, die aufgrund ihrer beiden Querflächen ($S_1$, $S_2$) das Licht der Quelle zu zwei Konussen ($C_1$, $C_2$) verteilt, die sich quer (y) um zwei geneigte Ebenen in dem Detektionsraum (E) erstreckten.

3. Schnittstellenmodul nach Anspruch 1, **dadurch gekennzeichnet, dass** die innere Grenzfläche ($\delta_{int}$) eine Austrittsgrenzfläche ist, die im montierten Zustand des Lichtleiters gegenüber einem Lichtdetektor (11) gelegen ist, und dass die äußere Grenzfläche ($\delta_{ext}$) eine Eintrittsgrenzfläche ist, die aufgrund ihrer beiden Querflächen ($S_1$, $S_2$) das Licht der Quelle, das in zwei Konusse ($C_1$, $C_2$) gelangt, die sich quer um zwei geneigte Ebenen in dem Detektionsraum erstrecken, erfasst und das Licht jeder der beiden geneigten Ebenen zu ihrer inneren Grenzfläche ($\delta_{int}$) führt.

4. Schnittstellenmodul nach Anspruch 1, 2 oder 3, **dadurch gekennzeichnet, dass** die äußere Grenzfläche ($\delta_{ext}$) zwei ebene Flächen ($S_1$, $S_2$) umfasst, die in einer Querebene (xz) geneigt sind, um eine konkave äußere Grenzfläche ($\delta_{ext}$) zu bilden.

5. Schnittstellenmodul nach einem der vorhergehenden Ansprüche, **dadurch gekennzeichnet, dass** die innere Grenzfläche ($\delta_{int}$) zwei konvergente Linsen bildende Flächen umfasst, die jeweils mit einer der Flächen ($S_1$, $S_2$) der äußeren Grenzfläche ($\delta_{ext}$) gekoppelt sind.

6. Schnittstellenmodul nach einem der vorhergehenden Ansprüche, **dadurch gekennzeichnet, dass** der Lichtleiter (9) eine Mehrzahl von inneren Grenzflächen ($\delta_{int}$) umfasst, die entlang einer Querachse angeordnet sind und durch Seitenwände (19) begrenzt werden, die in Richtung des Detektionsraums (E) aufgeweitet sind.

7. Schnittstellenmodul nach dem vorhergehenden Anspruch, **dadurch gekennzeichnet, dass** der Lichtleiter (9) aus einem einzigen Stück ausgeführt ist, wobei die aufgeweiteten Seitenwände (19) pyramidenstumpfförmige Keulen ($L_1$ bis $L_5$) bilden, wobei die abgeschnittene Seite die inneren Grenzflächen ($\delta_{int}$) bildet.

8. Schnittstellenmodul nach Anspruch 6 oder 7, **dadurch gekennzeichnet, dass** ein Teil der aufgeweiteten Seitenwände (19) der Keulen ($L_1$ bis $L_5$) stufenförmig ausgeführt ist, wobei sich Querseiten und geneigte Seiten, die die Aufweitung bilden, abwechseln.

9. Schnittstellenmodul nach Anspruch 8, **dadurch gekennzeichnet, dass** die Keulen ($L_1$ bis $L_5$) mit stufenförmig ausgeführten aufgeweiteten Wänden prismatische Hohlräume (21) entlang der Querrichtung aufweisen, die senkrecht zu der Achse verläuft, entlang der die Keulen ausgerichtet sind.

10. Schnittstellenmodul nach einem der Ansprüche 1 bis 9, **dadurch gekennzeichnet, dass** es eine Leiterplatte (7) umfasst, auf der eine Reihe aus Lichtquellen (5) und/oder Detektoren angeordnet ist, und dass es mindestens einen Lichtleiter nach Anspruch 7 umfasst, wobei die Lichtquellen (5) und/oder die Detektoren (11) gegenüber den Keulen angeordnet sind.

11. Schnittstellenmodul nach dem vorhergehenden Anspruch, **dadurch gekennzeichnet, dass** der Lichtleiter eine Keule mit glatten aufgeweiteten Seitenwänden (19) umfasst und vier Keulen mit stufenförmig ausgeführten Seitenwänden (19), die beidseits der Keule mit glatten Wänden verteilt sind, und dass es einen Lichtdetektor (11) umfasst, der gegenüber der inneren Grenzfläche der Keule mit glatten Wänden angeordnet ist, und vier Leuchtdioden, die gegenüber den inneren Grenzflächen ($\delta_{int}$) der Keulen mit stufenförmig ausgeführten Wänden angeordnet sind.

12. Schnittstellenmodul nach einem der Ansprüche 10 bis 11, **dadurch gekennzeichnet, dass** es umfasst:

    • jeweils mindestens zwei Lichtquellen (5) oder mindestens zwei Lichtsensoren (11), die auf einer Leiterplatte eingerichtet sind,
    • jeweils mindestens einen Sensor (11) oder mindestens eine Lichtquelle (5), der bzw. die den gesamten Detektionsraum (E) abdeckt,
    • den ersten Lichtleiter (9) nach einem der Ansprüche 1 bis 11, der gegenüber mindestens einer der Lichtquellen oder einem der Lichtsensoren der Leiterplatte angeordnet ist,
    • einen zweiten Lichtleiter (13) zum Emittieren oder Empfangen eines Lichtstrahls um eine Ebene, die in Bezug auf eine optische Achse (z) des Lichtleiters um einen Winkel θ geneigt ist, der in Form eines Prismas aus transparentem Material mit dem Index $n_{GL}$ ausgeführt ist, das umfasst:

        ○ eine innere Grenzfläche ($\delta_{int}$), die dazu bestimmt ist, gegenüber einer Leiterplatte (7) zu liegen, die eine Lichtquelle (5) oder einen Lichtdetektor (11) trägt, eine konvergente Linse bildend, deren Brennpunkt im Bereich einer erwarteten Position der Quelle (5) oder des Lichtdetektors (11) gelegen ist,
        ○ eine erste ebene Seite (15), die parallel zu der optischen Achse (z) des Lichtleiters ausgerichtet ist,
        ○ eine zweite ebene Seite (17), die in Bezug auf die erste ebene Seite (15) mit einem Winkel α geneigt ist, der $\cos(\alpha+\theta) = (1+\varepsilon)$ $n_{GL}.\cos 3\alpha$ erfüllt, wobei ε eine Zahl zwischen -0,1 und 0,1 ist.

## Claims

1. Interface module, in particular for a vehicle passenger compartment, for detecting the presence of or gestures by part of the body of a user (U), comprising:

    ○ at least one light source (5) intended to illuminate at least part of a detection space (E) of the interface module, and
    ○ at least one light detector (11);
    the interface module comprising a light guide (9) comprising a body made of transparent or translucent material guiding light by reflection from guiding walls (6) thereof, comprising:

        ○ an inner dioptric interface ($\delta_{int}$) at one of the ends of the body made of transparent or translucent material, intended to be directed toward the at least one light detector (11) or the at least one light source (5),
        ○ an outer dioptric interface ($\delta_{ext}$), located at an end opposite the inner dioptric interface ($\delta_{int}$) of the body made of transparent material,

    the outer dioptric interface comprising two distinct transverse surfaces ($S_1$, $S_2$), with normals pointing in different directions so as to conjugate light between, on the one hand, two separate segments ($C_1$, $C_2$) of the detection space (E), and on the other hand, the inner dioptric interface ($\delta_{int}$), the light guide (9) being configured to emit light into or collect light from two separate segments ($C_1$, $C_2$) of the detection space (E); **characterized in that** the at least one light detector (11) is intended to detect light returned by a part of the body of a user (U) located in the detection space (E).

2. Interface module according to Claim 1, **characterized in that** the inner dioptric interface ($\delta_{int}$) is an entrance dioptric interface located, in the installed state of the light guide, facing a light source (5), and **in that** the outer dioptric interface ($\delta_{ext}$) is an exit dioptric interface that distributes, because of its two transverse surfaces ($S_1$, $S_2$), light of the source between two cones ($C_1$, $C_2$) that extend transversely (y) about two inclined planes in the detection space (E).

3. Interface module according to Claim 1, **character-**

**ized in that** the inner dioptric interface ($\delta_{int}$) is an exit dioptric interface located, in the installed state of the light guide, facing a light detector (11), and **in that** the outer dioptric interface ($\delta_{ext}$) is an entrance dioptric interface that collects, because of its two transverse surfaces ($S_1$, $S_2$), light of the source delivered in two cones ($C_1$, $C_2$) that extend transversely about two inclined planes in the detection space, and sends the light of each of the two inclined planes to its inner dioptric interface ($\delta_{int}$).

4. Interface module according to Claim 1, 2 or 3, **characterized in that** the outer dioptric interface ($\delta_{ext}$) comprises two plane surfaces ($S_1$, $S_2$) that are inclined in a transverse plane (xz) to form a concave outer dioptric interface ($\delta_{ext}$).

5. Interface module according to any of the preceding claims, **characterized in that** the inner dioptric interface ($\delta_{int}$) comprises two surfaces forming convergent lenses, each conjugated with one of the surfaces ($S_1$, $S_2$) of the outer dioptric interface ($\delta_{ext}$).

6. Interface module according to any of the preceding claims, **characterized in that** the light guide (9) comprises a plurality of inner dioptric interfaces ($\delta_{int}$) placed along a transverse axis, and bounded by side walls (19) that flare in the direction of the detection space (E).

7. Interface module according to the preceding claim, **characterized in that** the light guide (9) is one piece, the flaring side walls (19) bounding lobes ($L_1$ to $L_5$) having the shape of a truncated pyramid, the truncated face forming the inner dioptric interfaces ($\delta_{int}$).

8. Interface module according to Claim 6 or 7, **characterized in that** part of the flaring side walls (19) of the lobes ($L_1$ to $L_5$) contains steps, alternating transverse faces and inclined faces forming the flare.

9. Interface module according to Claim 8, **characterized in that** the lobes ($L_1$ to $L_5$) with flaring walls containing steps comprise prismatic cavities (21) in the transverse direction perpendicular to the axis along which said lobes are aligned.

10. Interface module according to any of Claims 1 to 9, **characterized in that** it comprises a printed circuit board (7) on which is placed a row of light sources (5) and/or detectors, and **in that** it comprises a light guide at least according to Claim 7, the light sources (5) and/or detectors (11) being placed facing the lobes.

11. Interface module according to the preceding claim, **characterized in that** the light guide comprises one lobe with smooth flaring side walls (19), and four lobes with side walls (19) containing steps, which are distributed on either side of the lobe with smooth walls, and **in that** it comprises one light detector (11) placed facing the inner dioptric interface of the lobe with smooth walls, and four light-emitting diodes placed facing the inner dioptric interfaces ($\delta_{int}$) of the lobes with side walls containing steps.

12. Interface module according to either of Claims 10 and 11, **characterized in that** it comprises:

• either at least two light sources (5) or at least two light sensors (11), arranged on a printed circuit board,
• either at least one sensor (11) or at least one light source (5), covering the entire detection space (E),
• the first light guide (9) according to any of Claims 1 to 11, placed facing at least one of the light sources or one of the light sensors of the printed circuit board,
• a second light guide (13) for emitting or receiving a light beam about a plane inclined at an angle θ with respect to an optical axis (z) of the light guide, taking the form of a prism made of transparent material of index $n_{GL}$ that comprises:

○ an inner dioptric interface ($\delta_{int}$) intended to face a printed circuit board (7) bearing a light source (5) or a light detector (11), forming a converging lens the focal point of which is located at an expected position of the source (5) or of the light detector (11),
○ a first planar face (15) oriented parallel to the optical axis (z) of the light guide,
○ a second planar face (17) that is inclined with respect to the first planar face (15) by an angle $\alpha$, satisfying $\cos(\alpha+\theta) = (1+\varepsilon)\, n_{GL} \cdot \cos 3\alpha$, where $\varepsilon$ is a number between -0.1 and 0.1.

100

Fig. 1

Fig. 2

Fig. 3

Fig. 4

Fig. 5

Fig. 6

Fig. 7

Fig. 8a

Fig. 8b

Fig. 9

Fig. 10a

Fig. 10b

Fig. 11

Fig. 12a

Fig. 12b

Fig. 13

**EP 3 785 060 B1**

## RÉFÉRENCES CITÉES DANS LA DESCRIPTION

### Documents brevets cités dans la description

- WO 2011060487 A1